# FASCICULE DE BREVET EUROPEEN

(11) **EP 1 006 206 B1**
(45) Date de publication et mention de la délivrance du brevet: **26.03.2003**
(21) Numéro de dépôt: 99402977.5
(22) Date de dépôt: 30.11.1999
(51) Int. Cl.: C22C 9/01

(54) **Fourchettes de boîte de vitesse de véhicules automobiles réalisées en un cupro-alliage**
Schaltgabeln von Kraftfahrzeugen aus einer Kupferlegierung
Gearshift forks of motor vehicles made of a copper alloy

(30) Priorité: 01.12.1998 FR 9815121
(43) Date de publication de la demande: 07.06.2000
(73) Titulaire: BRONZE ACIOR S.A., 27750 La Couture-Boussey (FR)
(72) Inventeur: Leprat, Rémi, 27540 Ivry la Bataille (FR)
(74) Mandataire: Leszczynski, André

(56) Documents cités:
- DE-C- 918 412
- GB-A- 744 523
- GB-A- 1 554 843
- US-A- 2 798 826
- US-A- 4 436 544
- DATABASE WPI Section Ch, Week 199238 Derwent Publications Ltd., London, GB; Class L03, AN 1992-313571 XP002129159 & JP 04 221033 A (ITOIGAWA M), 11 août 1992 (1992-08-11) & PATENT ABSTRACTS OF JAPAN vol. 016, no. 566 (C-1009), 8 décembre 1992 (1992-12-08) JP

## Description

La présente invention est relative à une fourchettes de boîte de vitesses de véhicules, réalisée en un cupro-alliage présentant des caractéristiques mécaniques élevées en particulier en ce qui concerne la résistance maximale (charge de rupture) et surtout la limite élastique.

Les boîtes de vitesses de type mécanique, comportent habituellement un arbre primaire solidaire du moteur par l'intermédiaire de l'embrayage et un arbre secondaire relié aux roues motrices.

L'arbre primaire porte un pignon en prise avec un engrenage d'un arbre intermédiaire disposé en parallèle de l'arbre principal et de l'arbre secondaire, l'arbre intermédiaire portant autant d'engrenages que de combinaisons voulues pour la boîte de vitesses.

L'arbre secondaire est muni de couronnes ou pignons dits "baladeurs" ou "manchons" qui peuvent coulisser le long de l'arbre tout en restant entraînés par lui au moyen de cannelures.

Par action sur le levier de changement de vitesse, on sélectionne un baladeur ou manchon correspondant au rapport de vitesses souhaité, ce baladeur étant alors verrouillé sur un engrenage de l'arbre intermédiaire assurant la prise avec l'arbre moteur.

Cette sélection du baladeur ou manchon s'effectue par l'intermédiaire d'une pièce appelée fourchette, mobile le long d'un axe parallèle aux arbres portant les pignons de la boîte de vitesses.

La fourchette comporte habituellement deux bras au bout de chacun desquels se situe un patin ou bec qui assure le contact avec le baladeur ou manchon lors du passage de la vitesse.

Les fourchettes doivent présenter de bonnes propriétés mécaniques, notamment en ce qui concerne la charge de rupture, la limite élastique et les possibilités d'allongement pour éviter la casse en fonctionnement et en outre présenter une bonne résistance au frottement notamment au niveau des patins.

Pour la réalisation de fourchettes dans les véhicules modernes, aussi bien les véhicules automobiles que les véhicules industriels ou à deux roues, on utilise des fourchettes en des alliages métalliques tels que des fontes, du laiton H.R., des alliages légers d'aluminium et des cupro-alliages, notamment des alliages cuivre/aluminium.

Les fourchettes en ces cupro-alliages sont réalisées par moulage en étant coulées par gravité dans un moule métallique ou "coquille".

Dans le cadre du développement de boîtes de vitesses à commande assistée de type "TIPTRONIC" il s'est révélé nécessaire de mettre au point des fourchettes aptes à fléchir dans des proportions importantes lors de l'application d'une charge, en particulier pour "encaisser" la puissance des vérins mis en oeuvre pour la commande assistée.

Pour assurer une flexibilité satisfaisante il s'est avéré nécessaire de pouvoir disposer pour la réalisation de fourchettes, de matériaux présentant une limite élastique au moins de moitié supérieure à celle des matériaux couramment utilisés y compris les alliages cuivre/aluminium, du type CuAl₁₀Fe₅Ni₅ ou CuAl₁₁Fe₆Ni₆ notamment tels que définis dans le projet de norme européenne EN1982.

Dans le cadre de ses recherches et développements, la Société déposante a découvert de façon tout à fait surprenante que le but recherché, à savoir une très forte augmentation de la limite élastique, pouvait être atteint en sélectionnant de manière précise les composants d'un cupro-alliage de type cuivre/aluminium de composition générale proche de CuAl₁₀Fe₅Ni₅ ou CuAl₁₁Fe₆Ni₆ tels que définis par le projet de norme rappelé ci-dessus.

La fourchette de boîtes de vitesses selon la présente invention se caractérise par le fait qu'elle est réalisée en un cupro-alliage qui présente la composition suivante, en pourcentage en poids :
- Al 9,7 à 10,4
- Fe 3,7 à 4,4
- Ni 5,7 à 6,3
- Mn 0 à 0,50
- Pb 0 à 0,30
- Si 0 à 0,50
- Zn 0 à 1,50
le reste étant constitué par du cuivre et des impuretés inévitables.

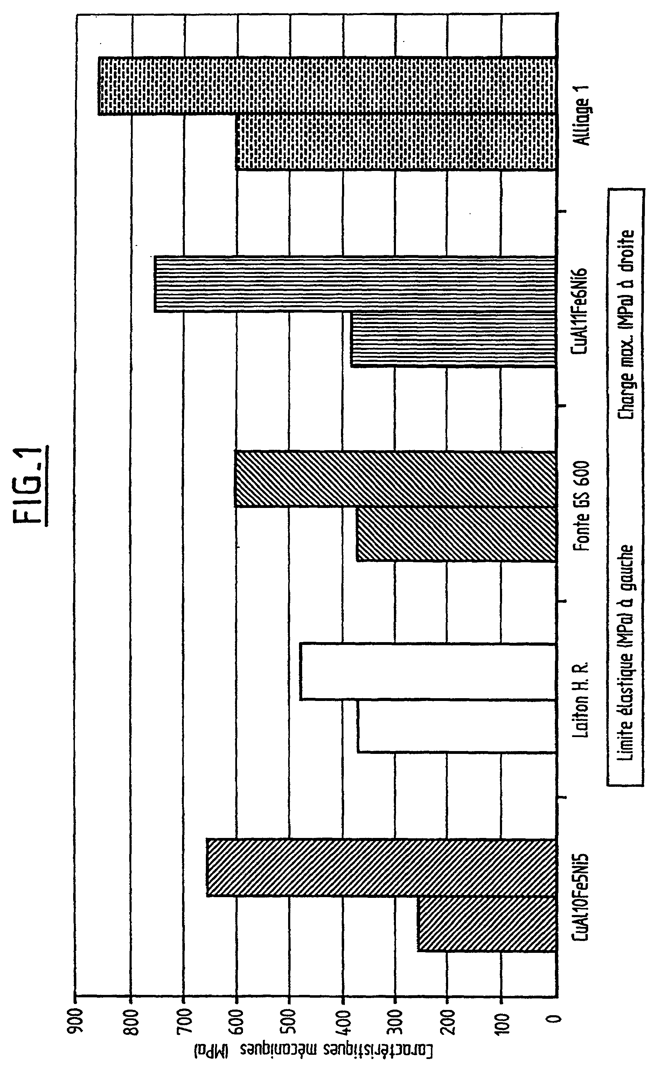

On a représenté en figure 1 les caractéristiques mécaniques et plus précisément la limite élastique et la charge maximale d'un cupro-alliage tel que revendiquée pour les fourchettes selon l'invention, de cupro-alliages de formule générale CuAl₁₀Fe₅Ni₅ et CuAl₁₁Fe₆Ni₆, ainsi que du laiton H.R. et de la fonte GS 600.

Plus précisément l'alliage pour les fourchettes selon l'invention désigné par Alliage 1 sur la ligne 1 avait la composition indiquée dans l'exemple 1 ci-après, exprimée en pourcentage en poids:

### EXEMPLE 1:

- Al 10
- Fe 4
- Ni 6
- Mn 0,10
- Pb 0,05
- Si 0,10
- Zn 0,20
le reste étant constitué par du cuivre et des impuretés inévitables.

Les cupro-alliages CuAl₁₀Fe₅Ni₅ et CuAl₁₁Fe₆Ni₆ avaient respectivement les compositions suivantes exprimées en poids :
- Al 8,5
- Fe 4
- Ni 4
- Mn 0
- Pb 0
- Si 0
- Zn 0
le reste étant constitué par du cuivre et des impuretés inévitables.
- Al 10
- Fe 4
- Ni 4
- Mn 0
- Pb 0
- Si 0
- Zn 0
le reste étant constitué par du cuivre et des impuretés inévitables.

On constate de l'examen de la figure 1 que la résistance maximale de l'alliage pour les fourchettes selon l'invention est bien supérieure à la résistance maximale des matériaux comparatifs utilisés mais que surtout l'accroissement de la limite élastique spectaculaire atteignant 600 Mpa pour moins de 400 Mpa pour les matériaux comparatifs soit une augmentation supérieure à 50 %.

Les mesures des caractéristiques mécaniques ont été effectuées conformément aux normes NFA 53709. Cette augmentation de la limite élastique se traduit par des propriétés améliorées de flexion sous charge des fourchettes réalisées en un matériau selon l'invention.

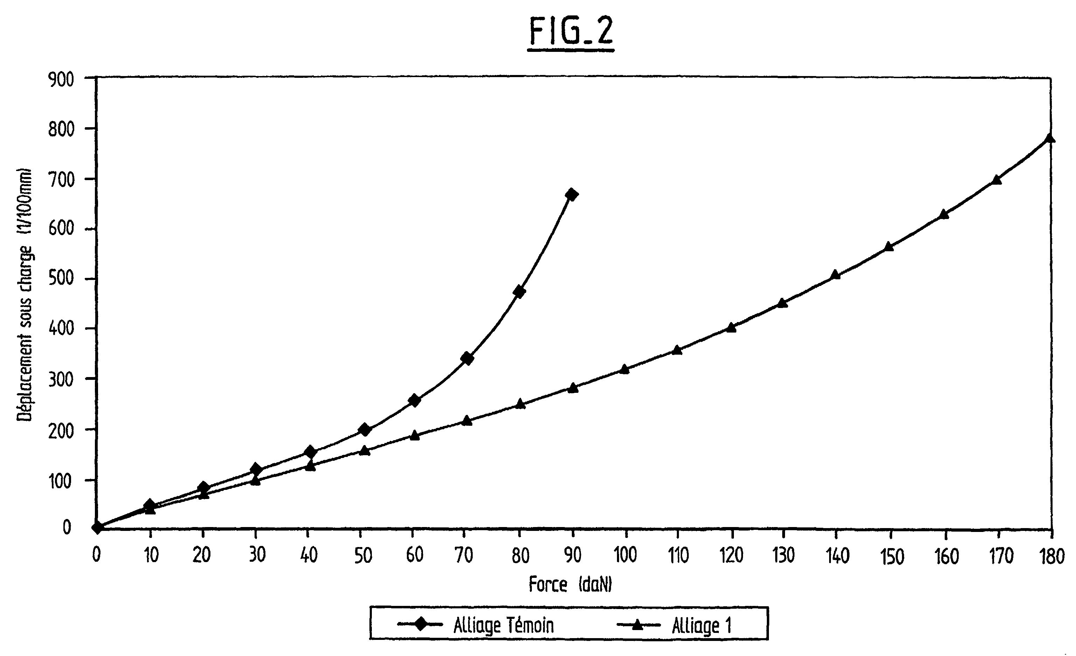

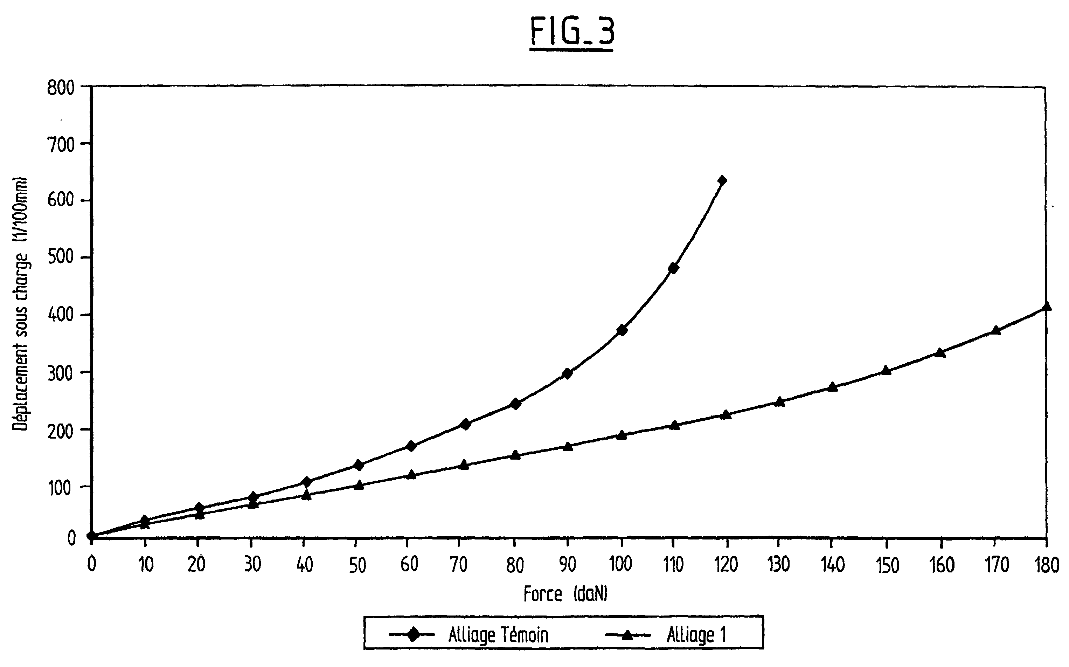

Les résultats d'essais de flexion sous charge de fourchettes de boîtes de vitesses réalisées selon l'invention par rapport à des fourchettes de dimensions identiques réalisées en alliage CuAl₁₀Fe₅Ni₅ mentionnés ci-dessus sont indiqués aux figures 2 et 3.

Le graphique de la figure 2 représente le déplacement sous charge du grand bras de la fourchette en fonction de la force appliquée, et le graphique de la figure 3 représente le déplacement du petit bras de la fourchette. Les fourchettes utilisées pour les essais ont été coulées par gravité en coquille et ont été éjectées dès solidification et refroidies à la température ambiante.

Les fourchettes ainsi réalisées ont les dimensions des fourchettes 3/4 de la boîte de vitesses JB de RENAULT.

Les essais ont été effectués en bloquant la fourchette au niveau du fût et en appliquant la charge au sommet du bombé du patin.

Les résultats rapportés aux figures 2 et 3 mettent en évidence une augmentation spectaculaire de la limite élastique.

Des résultats comparables ont été obtenus avec des cupro-alliages pour les fourchettes selon l'invention présentant les compositions suivantes, en pourcentage en poids :

### EXEMPLE 2 :

- Al 10,2
- Fe 3,7
- Ni 5,8
- Mn 0,2
- Pb 0,10
- Si 0,20
- Zn 0,20
le reste étant constitué par du cuivre et des impuretés inévitables.

### EXEMPLE 3 :

- Al 9,7
- Fe 4,4
- Ni 6,2
- Mn 0
- Pb 0,25
- Si 0
- Zn 0
le reste étant constitué par du cuivre et des impuretés inévitables.

## Revendications

1. Fourchette de boîtes de vitesses de véhicules, présentant des caractéristiques mécaniques, notamment de limite élastique, améliorées, **caractérisée par le fait qu'**elle est réalisée en un cupro-alliage qui présente la composition suivante en pourcentage en poids:
- Al 9,7 à 10,4
- Fe 3,7 à 4,4
- Ni 5,7 à 6,3
- Mn 0 à 0,50
- Pb 0 à 0,30
- Si 0 à 0,50
- Zn 0 à 1,50
le reste étant constitué par du cuivre et des impuretés inévitables.

## Claims

1. Selector fork for gearboxes of vehicles having improved mechanical characteristics, in particular of elastic limit, **characterised in that** it is formed from a cupro-alloy which has the following composition in percent by weight
- Al 9.7 to 10.4
- Fe 3.7 to 4.4
- Ni 5.7 to 6.3
- Mn 0 to 0.50
- Pb 0 to 0.30
- Si 0 to 0.50
- Zn 0 to 1.50
the balance being made up of copper and unavoidable impurities.

## Patentansprüche

1. Schaltgabel für Kraftfahrzeuggetriebe, mit verbesserten mechanischen Eigenschaften, insbesondere mit verbesserter Elastizitätsgrenze, **dadurch gekennzeichnet, daß** sie aus einer Kupferlegierung hergestellt ist, die, in Gewichtsprozenten, die folgende Zusammensetzung aufweist:
- Al 9,7 bis 10,4
- Fe 3,7 bis 4,4
- Ni 5,7 bis 6,3
- Mn 0 bis 0,50
- PB 0 bis 0,30
- Si 0 bis 0,50
- Zn 0 bis 1,50
Rest: Kupfer und unvermeidliche Verunreinigungen.
